# EUROPÄISCHE PATENTSCHRIFT

(11) **EP 4 069 587 B1**
(45) Veröffentlichungstag und Bekanntmachung des Hinweises auf die Patenterteilung: **27.09.2023**
(21) Anmeldenummer: 20824430.1
(22) Anmeldetag: 04.12.2020
(51) Int. Cl.: B64D 11/02, E06B 3/36, E04H 1/12

(54) **BORDTOILETTENZELLE**
ON BOARD TOILET CABIN
CABINE DE TOILETTE À BORD

(30) Priorität: 04.12.2019 AT 5021319 U
(43) Veröffentlichungstag der Anmeldung: 12.10.2022
(73) Patentinhaber: FACC AG, 4910 Ried im Innkreis (AT)
(72) Erfinder: RODRIGUEZ-CONDE, Jesus, 4600 Wels (AT); HÖLLER, Elisabeth, 4760 Raab (AT); HATZMANN, Bernhard, 4716 Hofkirchen (AT); GÜROCAK, Maximilian, 94032 Passau (DE)
(74) Vertreter: SONN Patentanwälte OG
(86) Internationale Anmeldenummer: PCT/AT2020/060431
(87) Internationale Veröffentlichungsnummer: WO 2021/108825

(56) Entgegenhaltungen:
- CN-Y- 2 764 904
- US-A1- 2012 261 509

## Beschreibung

Die Offenbarung betrifft eine Bordtoilettenzelle, insbesondere Flugzeugbordtoilettenzelle, umfassend:
eine vordere und eine hintere Längsseite,
eine vordere und eine hintere Schmalseite, die jeweils an ihrem einen Ende mit der vorderen Längsseite und an ihrem anderen Ende mit der hinteren Längsseite verbunden sind,
wobei die Längsseiten und die Schmalseiten einen Innenraum der Bordtoilettenzelle einschließen und die vordere und die hintere Längsseite jeweils breiter sind als die vordere und die hintere Schmalseite,
eine Toiletteneinheit mit einer Toilettenöffnung, und
eine L-förmige Tür zum Zugang in die Bordtoilettenzelle, wobei die L-förmige Tür einen Türschenkel in der vorderen Längsseite und einen Türschenkel in der vorderen Schmalseite aufweist. Weiters betrifft die Offenbarung ein Flugzeug mit einer Bordtoilettenzelle.

Die heutigen Bordtoilettenzellen, insbesondere in Flugzeugen, sind nur sehr eingeschränkt behindertengerecht. Ein Grund hierfür sind die beengten Platzverhältnisse. Vielfach weisen die Bordtoilettenzellen eine größere Erstreckung in eine Richtung als in eine dazu orthogonale Richtung auf. Es wurden in der Vergangenheit bereits verschiedene Versuche unternommen, die Behindertengerechtigkeit von Bordtoilettenzellen zu verbessern.

Die US 2012/0261509 A1 zeigt etwa eine Bordtoilette mit einer Toilettentüre an der einen kürzeren Seite der Toilettenzelle und der Toilette selbst an der gegenüberliegenden kürzeren Seite der Toilettenzelle. Ein Waschbeckentisch ist an einer der längeren Seiten der Toilettenzelle angeordnet. Unter dem Waschbeckentisch ist ein Freiraum für die Beine eines Rollstuhlfahrers ausgebildet. Nachteilig ist jedoch, dass sich der Rollstuhlfahrer über einen großen Winkel drehen muss, um sich auf die Toilette setzen zu können. Weiters steht für die Drehbewegung wenig Raum zur Verfügung, und der Rollstuhlfahrer bzw. sein Körperschwerpunkt können aufgrund der Anordnung der Toilette nicht nahe an den Toilettensitz herangeführt werden. Schließlich ist eine große Längserstreckung der Toilettenzelle notwendig, um den Rollstuhl aufnehmen zu können.

CN 2 764 904 Y zeigt eine Tür mit einen L-förmigen Türblatt.

Die Aufgabe der vorliegenden Erfindung besteht darin, zumindest einzelne Nachteile des Standes der Technik zu lindern bzw. zu beheben. Die Erfindung setzt sich insbesondere zum Ziel, eine Bordtoilettenzelle vorzuschlagen, die die Benutzung durch eine Person mit eingeschränkter Mobilität, insbesondere einen Rollstuhlfahrer, erleichtert. Dieses Ziel soll insbesondere bei einer Bordtoilettenzelle erreicht werden, die engen Raumverhältnissen unterliegt. Vorzugsweise soll der Rollstuhlfahrer seinen Körper über einen möglichst geringen Drehwinkel drehen müssen, um sich auf die Toilette zu setzen, vor allem soll der Körperschwerpunkt möglichst wenig verschoben werden. Vorzugsweise soll bei engen Raumbedingungen Platz für den Rollstuhl und Rollstuhlfahrer, insbesondere dessen Knie, gewonnen werden.

Diese Aufgabe wird durch eine Bordtoilettenzelle mit den Merkmalen von Anspruch 1 und ein Flugzeug mit den Merkmalen von Anspruch 15 gelöst. Bevorzugte Ausführungsformen sind in den abhängigen Ansprüchen angegeben.

Erfindungsgemäß ist die Toiletteneinheit an die hintere Längsseite angrenzend angeordnet. Der Türschenkel in der vorderen Längsseite ist breiter als der Türschenkel in der vorderen Schmalseite.

Der Rollstuhlfahrer auf dem Rollstuhl nimmt mehr Raum in Fahrtrichtung als quer dazu ein. Durch das Vorsehen der Toiletteneinheit an der hinteren Längsseite kann vorteilhafterweise ein grö-ßerer Teil der Längserstreckung der Toilette ausgenützt werden, indem die Längserstreckung des Rollstuhls schräg zur Schmalseite der Toilettenzelle, annähernd parallel zur Längsseite, ausgerichtet wird. Somit kann der Rollstuhlfahrer längs an der Toiletteneinheit vorbeirollen. Die Toiletteneinheit blockiert somit nicht einen Teil der Längserstreckung der Toilettenzelle, was der Fall wäre, wenn die Toilette an einer Schmalseite angeordnet ist. Ein Einfahren in die Toilettenzelle (fast) parallel zur vorderen und/oder hinteren Längsseite wird durch die Anordnung der Türschenkel der L-Tür auch bei geringer Toilettengröße, insbesondere bei geringer Erstreckung der Schmalseiten, ermöglicht, da der Rollstuhl durch den vom breiteren Türschenkel an der vorderen Längsseite freigegebenen Bereich geführt werden kann. Weiters kann mit der erfindungsgemäßen Ausführung das assistierte Führen des Rollstuhlfahrers in die Bordtoilettenzelle erleichtert oder erst ermöglicht werden.

Vorzugsweise werden die Längsseiten und Schmalseiten jeweils durch Wände gebildet, wobei die Türe einen Teil der Wände ausbilden kann. Insbesondere schließt die vordere Längsseite an die vordere Schmalseite, die vordere Schmalseite an die hintere Längsseite, die hintere Längsseite an die hintere Schmalseite und die hintere Schmalseite an die vordere Längsseite an. Vorzugsweise sind die hintere und die vordere Längsseite, oder jeweils Abschnitte derselben, parallel zueinander und/oder sind die hintere und die vordere Schmalseite, oder jeweils Abschnitte derselben, parallel zueinander. Die vordere und die hintere Schmalseite weisen vorzugsweise einen Winkel von zwischen 75° und 105°, insbesondere von 90°, zur vorderen und hinteren Längsseite auf. Insbesondere Verbindungsabschnitte zwischen den Längsseiten und den Schmalseiten können in Draufsicht bzw. im Querschnitt durch eine Ebene parallel zu einer Bodenfläche gebogen ausgeführt sein. Dies ist insbesondere bei einem Flugzeug der Fall, damit die Bordtoilettenzelle der gekrümmten Außenkontur des Flugzeugs folgen kann. Es kann die hintere Schmalseite, die vordere Schmalseite, die hintere Längsseite und/oder die vordere Längsseite im Höhenverlauf gekrümmt sein.

Für die Zwecke dieser Offenbarung wird die Breite der Längsseiten und Schmalseiten gerechnet als horizontale Breite auf einer Höhe von 1 m über einem Boden. Die Orts- und Richtungsangaben, wie "horizontal", "vertikal", "oben", "unten" etc., beziehen sich auf den bestimmungsgemäßen Einbauzustand der Bordtoilette bei horizontaler Ausrichtung des damit ausgestatteten Transportmittels, insbesondere Flugzeugs. Im Falle von in Draufsicht abgerundeten Verbindungsabschnitten zwischen zwei aneinander anschließenden Seiten wird als Endpunkt für die Breite ein Schnittpunkt einer gedachten Verlängerung von einem geradlinigen Abschnitt der jeweiligen Seiten angesehen. Vorzugsweise bilden die Längsseiten und Schmalseiten im Querschnitt parallel zu einer horizontalen Ebene ein Rechteck, wobei die Längsseiten die langen Seiten und die Schmalseiten die kurzen Seiten des Rechtecks bilden. Durch die Kombination der Merkmale kann somit bei engen Platzverhältnissen eine besonders einfache Benutzung der Toilette durch einen Rollstuhlfahrer ermöglicht werden. Der Türschenkel in der vorderen Längsseite ist der breitere Türschenkel und der Türschenkel in der vorderen Schmalseite ist der schmälere Türschenkel. Der Begriff "breiter" bezieht sich auf eine horizontale Erstreckung in Richtung der jeweiligen Längs- bzw. Schmalseite auf einer Höhe von 1 m über einem Boden. Entfernungs- und Längenangaben beziehen sich auf die äußeren Abmessungen, d. h. der Bordtoilettenzelle abgewandt, d. h. die Dicke der Wände wird miteinbezogen.

Die vordere und die hintere Längsseite sind jeweils bevorzugt zumindest 1,05-mal, besonders bevorzugt zumindest 1,1-mal, noch mehr bevorzugt zumindest 1,15-mal oder 1,2-mal, so breit wie die vordere und die hintere Schmalseite. Die vordere und die hintere Längsseite sind jeweils bevorzugt zumindest 10 cm, besonders bevorzugt zumindest 25 cm, noch mehr bevorzugt zumindest 40 cm, breiter als die vordere und die hintere Schmalseite. Der breitere Türschenkel ist bevorzugt zumindest 1,1-mal, besonders bevorzugt zumindest 1,25-mal, noch mehr bevorzugt zumindest 1,4-mal, so breit wie der schmälere Türschenkel.

Die Bordtoilettenzelle ist eingerichtet zur Verwendung in Transportmitteln (wie Flugzeuge, Schiffe, Straßenfahrzeuge wie Wohnmobile, Reisebusse oder Schienenfahrzeuge). Besonders bevorzugt ist die Bordtoilettenzelle eine Flugzeugbordtoilettenzelle. Häufig sind in einem Flugzeug Bordtoilettenzellen unterschiedlicher Größe bzw. Form vorgesehen, wobei es sich bei der vorliegenden Bordtoilettenzelle vorzugsweise um den bspw. in Langstreckenflügen vorgesehenen größeren Typ handelt. Es weisen die vordere und hintere Schmalseite eine Breite auf, die jeweils bevorzugt größer als 0,8 m, besonders bevorzugt größer als 1,2 m, noch mehr bevorzugt größer als 1,5 m ist. Es weisen die vordere und hintere Längsseite eine Breite auf, die jeweils bevorzugt größer als 1 m, besonders bevorzugt größer als 1,4 m, noch mehr bevorzugt größer als 1,7 m ist. Andererseits weisen (insbesondere aufgrund von beschränkten Platzverhältnissen) die vordere und hintere Schmalseite eine Breite auf, die jeweils bevorzugt kleiner als 2 m, besonders bevorzugt kleiner als 1,8 m, noch mehr bevorzugt kleiner als 1,7 m ist und die vordere und hintere Längsseite eine Breite auf, die jeweils bevorzugt kleiner als 2,2 m, besonders bevorzugt kleiner als 2 m, noch mehr bevorzugt kleiner als 1,9 m ist.

Die Toiletteneinheit weist vorzugsweise eine Toilettensitzfläche auf, die die Toilettenöffnung umgibt. Die Toilettensitzfläche erstreckt sich im Wesentlich in einer Ebene. Weiters kann ein klappbarer Toilettensitz vorgesehen sein, der um im Wesentlichen 90° klappbar sein kann. Unter Toiletteneinheit wird insbesondere die in horizontaler Richtung durch die Ränder der (im Wesentlichen horizontal verlaufenden) Toilettensitzfläche begrenzte Einheit verstanden.

Es ist bevorzugt, wenn eine Toilettensitzachse einen Winkel von weniger als 45°, bevorzugt weniger als 30°, mit einer Normalen der hinteren Längsseite einschließt, wobei die Toilettensitzachse bevorzugt im Wesentlichen parallel zur Normalen der hinteren Längsseite verläuft. Die Toilettensitzachse wird gebildet durch die Symmetrieachse eines die Toilette benützenden Menschen. Vorzugsweise wird die Toilettensitzachse durch eine der vorderen Längsseite zugewandten Kante der Toilettensitzfläche bzw. der Toiletteneinheit bestimmt. Vorzugsweise schließt eine die Toilettenöffnung halbierende Toilettenachse oder eine den (klappbaren) Toilettensitz (im heruntergeklappten Zustand) halbierende Achse einen Winkel von weniger als 45°, bevorzugt weniger als 30°, mit einer Normalen der hinteren Längsseite ein und verläuft bevorzugt im Wesentlichen parallel zur Normalen der hinteren Längsseite. Hierdurch kann der notwendige Drehwinkel eines Rollstuhlfahrers bei gleichzeitigem Platzgewinn reduziert werden.

In einer vorteilhaften Ausführungsform ist der Angelpunkt der Türe an der vorderen Schmalseite vorgesehen. Das bedeutet, dass der kürzere Türschenkel den Angelpunkt, um den die Türe schwenkbar ist, aufweist. Wenn die Türe vollständig aufgeschwenkt wird, so dass der im geschlossenen Zustand in der vorderen Schmalseite vorgesehene Türschenkel an eine Außenseite der vorderen Schmalseite (fast) anliegt, kann vorteilhafterweise der längere Türschenkel einen Sichtschutz in einem entlang der vorderen Schmalseite verlaufenden Gang bilden. Weiters kann so der mögliche Öffnungswinkel der Türe vergrößert werden, bspw. wenn die hintere Schmalseite an einer Wand eines Fahrzeugs, insbesondere eines Flugzeugs, angeordnet ist, die eine vollständige Öffnung der Türe im Falle eines Angelpunkts auf der vorderen Längsseite blockieren würde.

Es ist vorteilhaft, wenn der Normalabstand der Toiletteneinheit und/oder der Toilettenöffnung von der vorderen Längsseite mehr als das 1,5-fache, bevorzugt mehr als das 2-fache, besonders bevorzugt mehr als das 3-fache, des Normalabstands des Mittelpunkts der Toilettenöffnung von der hinteren Längsseite beträgt. Vorteilhafterweise bezeichnet dies den Abstand zum Rand oder den Abstand zum Mittelpunkt (d. h. Flächenmittelpunkt in Draufsicht) des jeweiligen Elements. Somit kann mehr freier Raum für einen Rollstuhlfahrer geschaffen werden.

Es ist bevorzugt, wenn der Normalabstand der Toiletteneinheit und/oder der Toilettenöffnung von der vorderen Längsseite mehr als 25%, bevorzugt mehr als 35%, besonders bevorzugt mehr als 45% der Breite der hinteren und/oder der vorderen Schmalseite beträgt. Vorteilhafterweise bezeichnet dies den Abstand zum Rand oder den Abstand zum Mittelpunkt (d. h. Flächenmittelpunkt in Draufsicht) des jeweiligen Elements.

In einer bevorzugten Ausführungsform beträgt der Normalabstand des Mittelpunkts der Toilettenöffnung von der vorderen Schmalseite mehr als 15%, bevorzugt mehr als 20%, besonders bevorzugt mehr als 30% der Breite der hinteren Längsseite. Hierdurch wird die Zugänglichkeit der Toilette verbessert, da bspw. Platz für die Drehung des Körpers eines Rollstuhlfahrers auf die Toilette geschaffen wird.

Es ist vorteilhaft, wenn der Normalabstand des Mittelpunkts der Toilettenöffnung von der hinteren Schmalseite mehr als 25%, bevorzugt mehr als 35%, besonders bevorzugt mehr als 45% der Länge der hinteren Längsseite beträgt. Somit kann die Zugänglichkeit der Toilette durch einen Rollstuhlfahrer verbessert werden, da dieser seinen Körperschwerpunkt im Rollstuhl sitzend näher an die Toilette bringen kann, da Platz für die Beine vorhanden ist.

Es ist bevorzugt, wenn die Toiletteneinheit eine Sitzfläche umfasst, in der die Toilettenöffnung vorgesehen ist, wobei ein Schrägabschnitt einer der vorderen Längsseite zugewandten horizontalen Kante der Sitzfläche einen Winkel zwischen 1° und 60°, bevorzugt zwischen 5° und 45°, mit der hinteren Längsseite einschließt. Die Kante schließt die Sitzfläche in Richtung der vorderen Längsseite zumindest in einem Bereich ab. Auf diese Weise kann ein notwendiger Drehwinkel eines Rollstuhlfahrers reduziert werden. Andererseits kann somit erreicht werden, dass der Rollstuhlfahrer im auf der Sitzfläche sitzenden Zustand einfachen Zugang zu an der hinteren Schmalseite angeordneten Elementen, bspw. Klopapier oder ein Waschbecken, hat. Der Rollstuhlfahrer fährt insbesondere parallel zum Schrägabschnitt der Kante in die Bordtoilettenzelle ein. Vorteilhafterweise verläuft ein gerader Abschnitt der Kante parallel zur hinteren Längsseite und/oder zur Normalen der hinteren Schmalseite.

In einer vorteilhaften Ausführungsform liegt der Schrägabschnitt der Kante auf einer Geraden, die den auf der vorderen Schmalseite liegenden Türschenkel, bevorzugt jene Hälfte des Türschenkels, der näher an der hinteren Längsseite liegt, schneidet. Somit wird der Raum für das Einfahren eines Rollstuhlfahrers vergrößert.

Es ist vorteilhaft, wenn ein der vorderen Schmalseite zugewandter Ansatzpunkt des Schrägabschnitts der Kante an der Sitzfläche einen Normalabstand von der vorderen Schmalseite aufweist, der geringer ist als die Längserstreckung des Türschenkels an der vorderen Längsseite. Hierdurch wird es dem Rollstuhlfahrer vereinfacht, parallel Schrägabschnitt der Kante in die Bordtoilettenzelle einzufahren. Vorzugsweise schließt der gerade Abschnitt der Kante an den Ansatzpunkt in die andere Richtung an.

In einer bevorzugten Ausführungsform weist die Bordtoilettenzelle eine Waschbeckeneinheit mit einem Waschbecken auf, wobei die Waschbeckeneinheit angrenzend an die hintere Schmalseite angeordnet ist. Vorteilhafterweise ist ein Flächenmittelpunkt der Innenwandung der Wanne des Waschbeckens in Draufsicht (d. h. gemessen auf der oberen Fläche der Öffnung der Wandung) weniger als 45 cm, bevorzugt weniger als 30 cm, besonders bevorzugt weniger als 15 cm, von der hinteren Schmalseite entfernt. Somit wird der einem Rollstuhlfahrer zur Verfügung stehende Raum vergrößert.

Es ist bevorzugt, wenn die Waschbeckeneinheit und/oder das Waschbecken benachbart der vorderen Längsseite angeordnet ist. Vorteilhafterweise ist ein Flächenmittelpunkt der Innenwandung der Wanne des Waschbeckens in Draufsicht weniger als 55 cm, bevorzugt weniger als 40 cm, besonders bevorzugt weniger als 25 cm, von der vorderen Längsseite entfernt. Hierdurch wird Raum für die Beine des Rollstuhlfahrers auf einer der hinteren Längsseite zugewandten Seite der Waschbeckeneinheit, bspw. zwischen Toiletteneinheit und Waschbeckeneinheit, geschaffen.

Es ist bevorzugt, wenn die Toilettenöffnung in einer horizontalen Entfernung von weniger als 1,5 m, bevorzugt weniger als 1 m, besonders bevorzugt weniger als 80 cm, von dem Waschbecken angeordnet ist. Vorteilhafterweise gilt dies jeweils bezogen auf die Mittelpunkte der jeweiligen Elemente. Hierdurch kann das Waschbecken von einer Person im auf der Toilette sitzenden Zustand erreicht werden.

In einer vorteilhaften Ausführungsform beträgt der Normalabstand des Waschbeckens von der hinteren Längsseite mehr als 50%, bevorzugt mehr als 65%, der Länge der hinteren Schmalseite. Hierdurch wird Raum für die Beine des Rollstuhlfahrers auf einer der hinteren Längsseite zugewandten Seite der Waschbeckeneinheit, bspw. zwischen Toiletteneinheit und Waschbeckeneinheit, geschaffen.

Vorteilhafterweise sind Haltegriffe vorgesehen, an denen eine Person sich anhalten kann. Diese können bspw. einem Rollstuhlfahrer die Körperverlagerung vom Rollstuhl auf die Sitzfläche der Toilette vereinfachen. Vorteilhafterweise sind zumindest ein horizontal verlaufender Haltegriff und ein vertikal verlaufender Haltegriff angrenzend an die hintere Schmalseite vorgesehen. Bevorzugt ist der vertikal verlaufende Haltegriff näher an der vorderen Längsseite und der horizontal verlaufende Haltegriff näher an der hinteren Längsseite vorgesehen.

Bezugnehmend auf das erfindungsgemäße Flugzeug ist es vorteilhaft, wenn die Bordtoilettenzelle derart angeordnet ist, dass ein an die vordere Schmalseite anschließender Gang zu einem Sitzbereich für Passagiere führt. Somit kann der längere Türschenkel im geöffneten Zustand auch als Sichtschutz dienen.

Im Folgenden wird die Erfindung anhand von einer in den Figuren gezeigten bevorzugten Ausführungsform der Bordtoilettenzelle näher erläutert. Die Figuren zeigen im Einzelnen:
Fig. 1 die bevorzugte Ausführungsform der Bordtoilettenzelle in einer Schrägansicht;
Fig. 2 die Inneneinrichtung der gleichen Ausführungsform der Bordtoilettenzelle wie Fig. 1;
Fig. 3 die gleiche Ausführungsform der Bordtoilettenzelle wie Fig. 1 mit geschlossener Türe in eine Draufsicht;
Fig. 4 die gleiche Ausführungsform der Bordtoilettenzelle wie Fig. 1 mit geöffneter Türe in eine Draufsicht mit einem sich teilweise in der Bordtoilettenzelle befindenden Rollstuhlfahrer;
Fig. 5 die gleiche Ansicht wie Fig. 4 mit einem sich in der Bordtoilettenzelle befindenden Rollstuhlfahrer;
Fig. 6 die gleiche Ansicht wie Fig. 5, wobei mit teilweise in Richtung Toiletteneinheit verlagertem Körper des Rollstuhlfahrers;
Fig. 7 die gleiche Ansicht wie Fig. 5, wobei die Person auf der Toiletteneinheit sitzt und der Rollstuhl teilweise aus der Bordtoilettenzelle geschoben ist; und
Fig. 8 die gleiche Ansicht wie Fig. 5, wobei überlagert die Person sitzend im Rollstuhl und sitzend auf der Toiletteneinheit dargestellt ist.

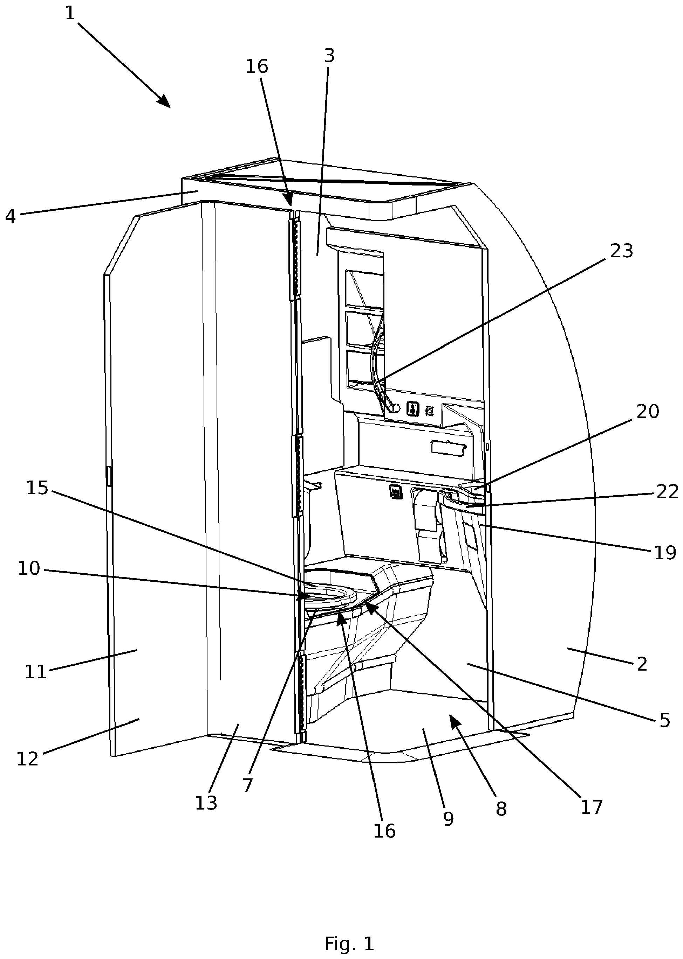

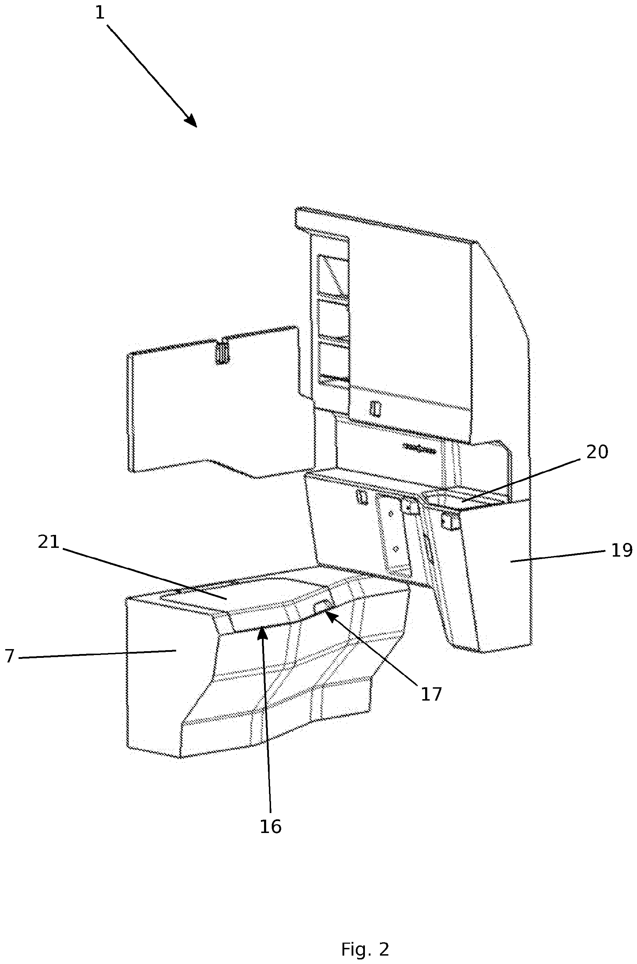

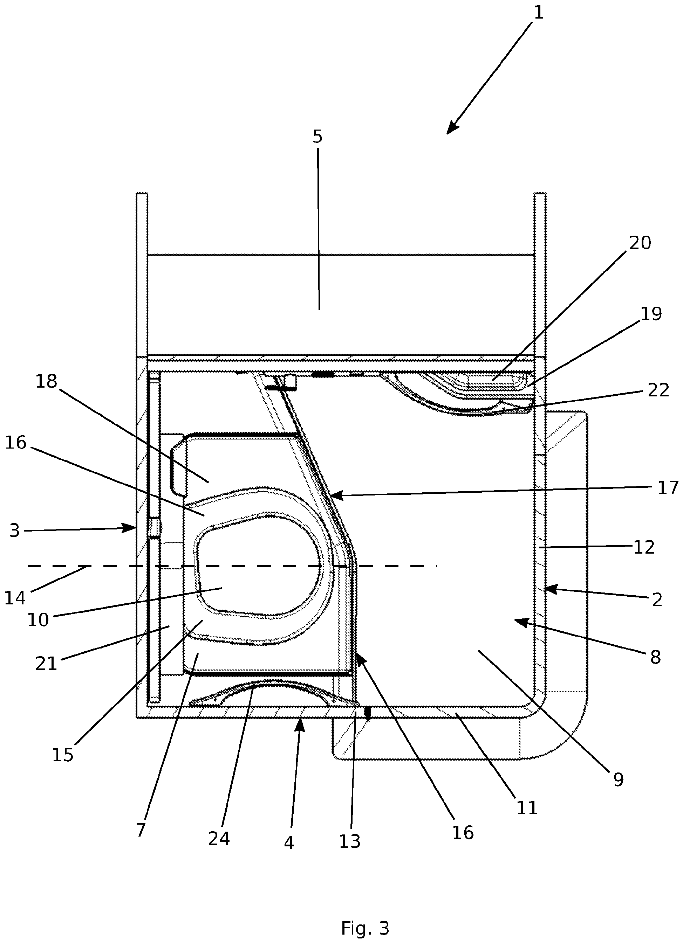

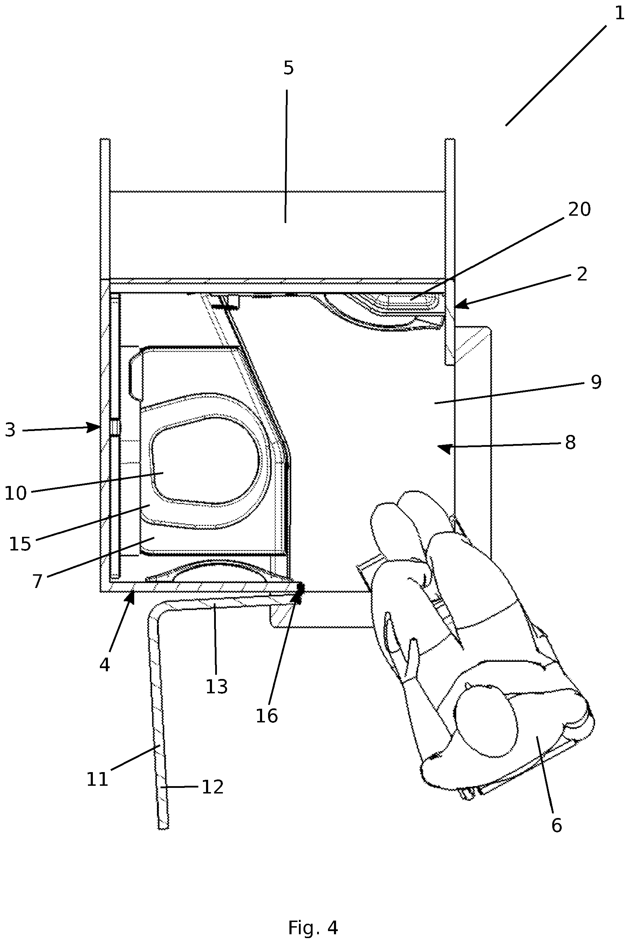

Die Fig. 1 bis 8 zeigen dieselbe bevorzugte Ausführungsform der Bordtoilettenzelle 1, die insbesondere eine Flugzeugbordtoilettenzelle ist. Fig. 1 zeigt diese in einer Schrägansicht von vorne. Fig. 2 zeigt die Inneneinrichtung der Bordtoilettenzelle 1. Die Fig. 3 bis 8 zeigen diese in einer Draufsicht, wobei die Fig. 4 bis 8 das Einfahren eines Rollstuhlfahrers 6 und das Verlagern des Körpers des Rollstuhlfahrers 6 auf die Toiletteneinheit 7 darstellen.

Die Bordtoilettenzelle 1 weist eine vordere Längsseite 2, eine hintere Längsseite 3, eine vordere Schmalseite 4 und eine hintere Schmalseite 5 auf. Dabei gehen die vordere Schmalseite 4 und die hintere Schmalseite 5 jeweils von einem Ende der vorderen Längsseite 3 und der hinteren Längsseite 4 aus und schließen an diese an. Die vordere Längsseite 2, die hintere Längsseite 3, die vordere Schmalseite 4 und die hintere Schmalseite 5 schlie-ßen einen Innenraum 8 der Bordtoilettenzelle 1 ein und begrenzen den Innenraum 8. Die vordere Längsseite 2 und die hintere Längsseite 3 sind jeweils breiter als die vordere Schmalseite 4 und die hintere Schmalseite 5, gemessen als horizontale Breite auf einer Höhe von 1 m über einem Boden 9 der Bordtoilettenzelle 1 (ungefähr entsprechend der Knie einer in einem Rollstuhl sitzenden Person). In dieser Ausführungsform ist die hintere Schmalseite 5 in ihrem Höhenverlauf, d. h. in einem Querschnitt parallel zur vorderen Längsseite 2, gekrümmt und somit an eine die Form eines Flugzeugrumpfes angepasst.

Die Bordtoilettenzelle 1 weist eine Toiletteneinheit 7 mit einer Toilettenöffnung 10 auf. Die Toiletteneinheit 7 ist an die hintere Längsseite 3 angrenzend angeordnet. Es ist eine L-förmige Tür 11 zum Zugang in die Bordtoilettenzelle 1 vorgesehen. Die L-förmige Tür 11 weist (im geschlossenen Zustand, vgl. Fig. 3) einen Türschenkel 12 in der vorderen Längsseite 2 und einen Türschenkel 13 in der vorderen Schmalseite 4 auf. Der Türschenkel 12 in der vorderen Längsseite 2 ist breiter als der Türschenkel 13 in der vorderen Schmalseite 4 (insbesondere auf einer Höhe von 1 m über dem Boden 9). Demgemäß wird der Türschenkel 12 in der vorderen Längsseite 2 auch als breiterer Türschenkel 12 und der Türschenkel 13 in der vordere Schmalseite 4 als schmälerer Türschenkel 13 bezeichnet. Der Angelpunkt 25 der Türe 11, der die Drehachse der Türe 11 definiert, ist an der vorderen Schmalseite 4 vorgesehen.

Ein Rollstuhlfahrer 6 kann somit fast parallel zur hinteren Längsseite 3 in die Bordtoilettenzelle 1 einfahren und kann die volle oder einen Großteil der Länge der Bordtoilettenzelle 1, wobei die Länge in Richtung der (breiteren) Längsseiten 2, 3 verläuft, ausnützen. Weiters stößt ein Rollstuhlfahrer 6 somit nicht an einen Türstock oder einen Türrahmen an.

Die Toilettensitzachse 14 (vgl. Fig. 3) schließt einen Winkel von etwa 0° mit einer Normalen der hinteren Längsseite 3 ein. Die Toilettensitzachse 14 ist in diesem Fall eine die Toilettenöffnung 10 halbierende Symmetrieachse, bzw. ist normal zu einer Kippachse eines Toilettensitzes 15. Somit verläuft die Toilettensitzachse 14 im Wesentlichen parallel zur Normalen der hinteren Längsseite 3. Der Abstand eines Mittelpunkts der Toilettenöffnung 10 von der vorderen Schmalseite 4 beträgt etwas weniger als die Hälfte des Abstands des Mittelpunkts von der hinteren Schmalseite 5. Weiters beträgt der Abstand des Mittelpunkts der Toilettenöffnung 10 von der vorderen Längsseite 2 etwas weniger als die Hälfte des Abstands des Mittelpunkts von der hinteren Längsseite 3.

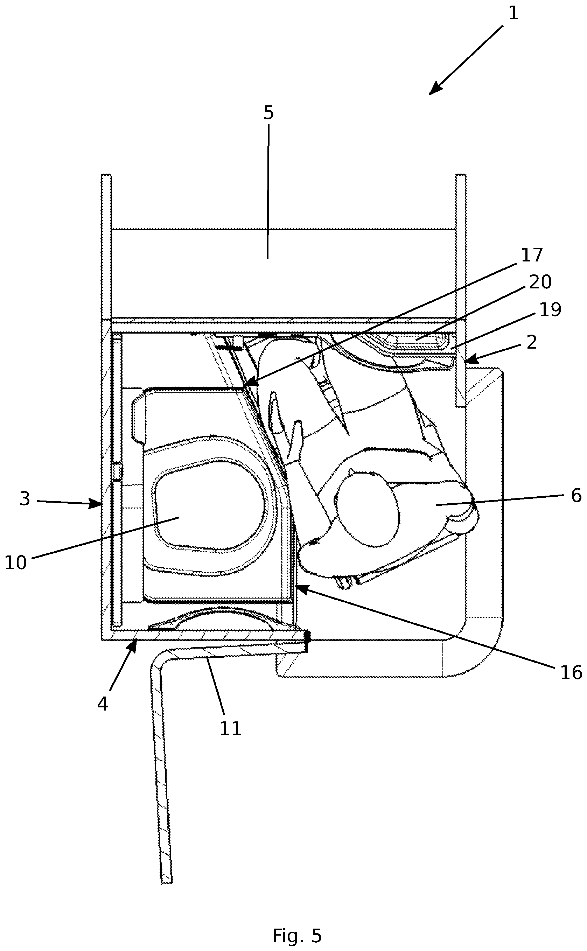

Die Toiletteneinheit 7 weist weiters eine Sitzfläche 18 auf. Die Sitzfläche 18 wird von einer die Toilettenöffnung 10 umgebenden Fläche gebildet sein, d. h. die Toilettenöffnung 10 ist in der Sitzfläche 18 vorgesehen. In der Praxis wird eine die Toilette benützende Person üblicherweise nicht direkt auf der Sitzfläche 18, sondern auf dem (aufklappbaren) Toilettensitz 15 sitzen. Die Sitzfläche 18 weist horizontal verlaufende Kante 16 auf, die der vorderen Längsseite 2 zugewandt ist. Die horizontal verlaufende Kante 16 umfasst einen Schrägabschnitt 17, der einen Winkel von etwa 25° mit der hinteren Längsseite 3 einschließt. Weiters liegt der Schrägabschnitt 17 der Kante 16 auf einer Geraden, die jene Hälfte des auf der vorderen Schmalseite 4 liegenden Türschenkels 13, der näher an der hinteren Längsseite 3 liegt, schneidet (im geschlossenen Zustand der Tür 11). Ein vorderer Ansatzpunkt 26 des Schrägabschnitts 17, der den Schrägabschnitt 17 in Richtung der vorderen Schmalseite 4 begrenzt, weist einen Normalabstand von der vorderen Schmalseite 4 auf, der geringer ist als die Längserstreckung des breiteren Türschenkels 12. Somit kann ein Rollstuhlfahrer 6 parallel zum Schrägabschnitt 17 der Kante 16 einfahren und seinen Rollstuhl direkt an die Toiletteneinheit 7 bzw. die Sitzfläche 18 angrenzend bzw. diese berührend platzieren (vgl. Fig. 4 und 5). Somit muss ein Rollstuhlfahrer 6 seinen Körperschwerpunkt nur gering vom Rollstuhl verlagern, um sich auf die Sitzfläche 18 zu setzen.

Die Bordtoilettenzelle 1 weist eine Waschbeckeneinheit 19 mit einem Waschbecken 20 auf. Die Waschbeckeneinheit 19 und das Waschbecken 20 sind angrenzend an die hintere Schmalseite 5 angeordnet. Die Waschbeckeneinheit 19 grenzt dabei direkt an die hintere Schmalseite 5 an. Weiters ist die Waschbeckeneinheit 19 und das Waschbecken 20 angrenzend an die vordere Längsseite 2 angeordnet. Auf diese Weise besteht zwischen der Waschbeckeneinheit 19 und der Toiletteneinheit 7 ein Raum für bspw. die Beine eines Rollstuhlfahrers 6 (vgl. Fig. 5). Weiters kann die Waschbeckeneinheit 19 nach unten einen der hinteren Schmalseite 5 zulaufenden, d. h. abnehmenden, Querschnitt aufweisen, sodass auch teilweise unterhalb der Waschbeckeneinheit 19 Raum für Körperteile eines Rollstuhlfahrers 6 ist. Die Toilettenöffnung 10 und das Waschbecken 20 sind in einer solchen horizontalen Entfernung zueinander angeordnet, dass eine über der Toilettenöffnung 10 sitzende Person sich die Hände waschen kann.

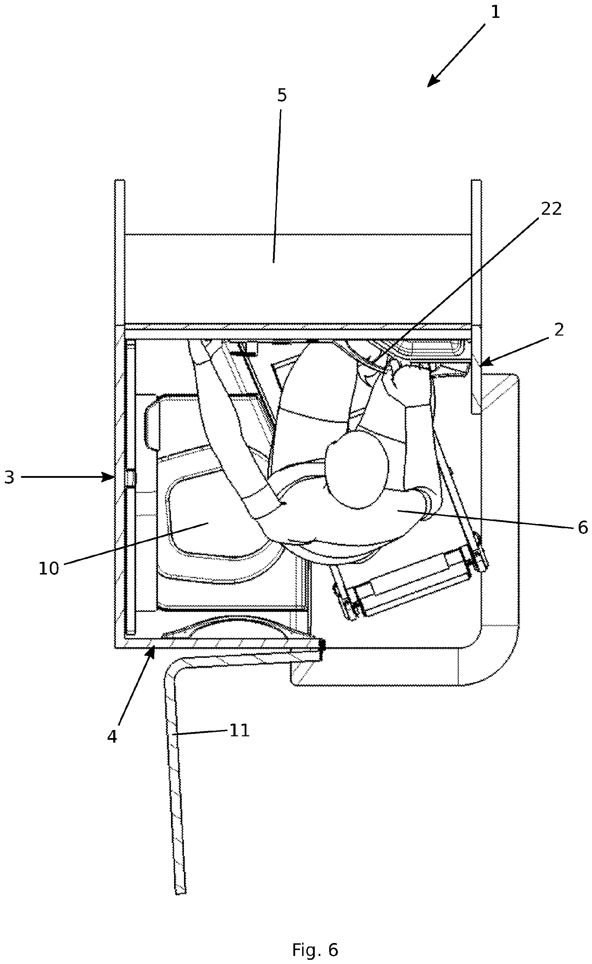

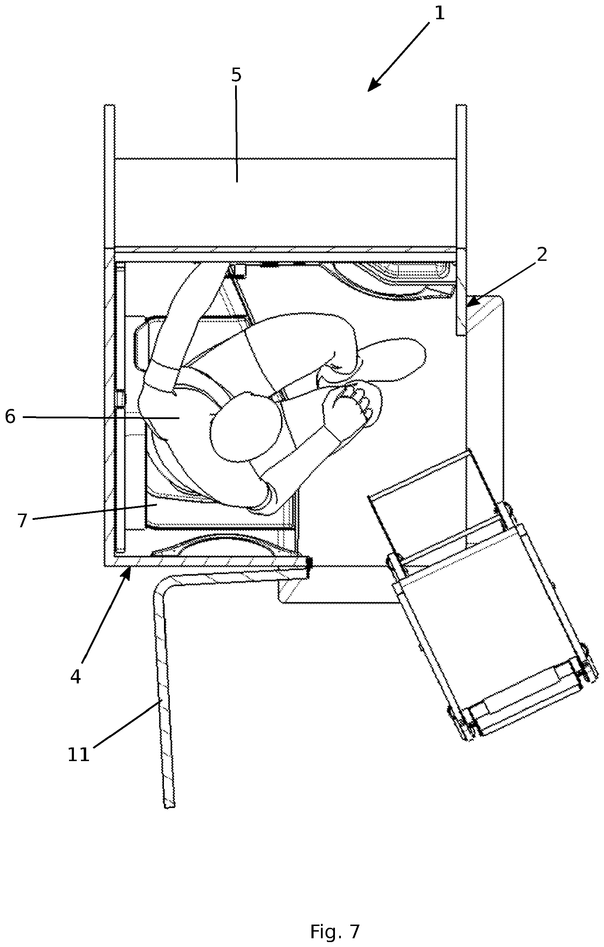

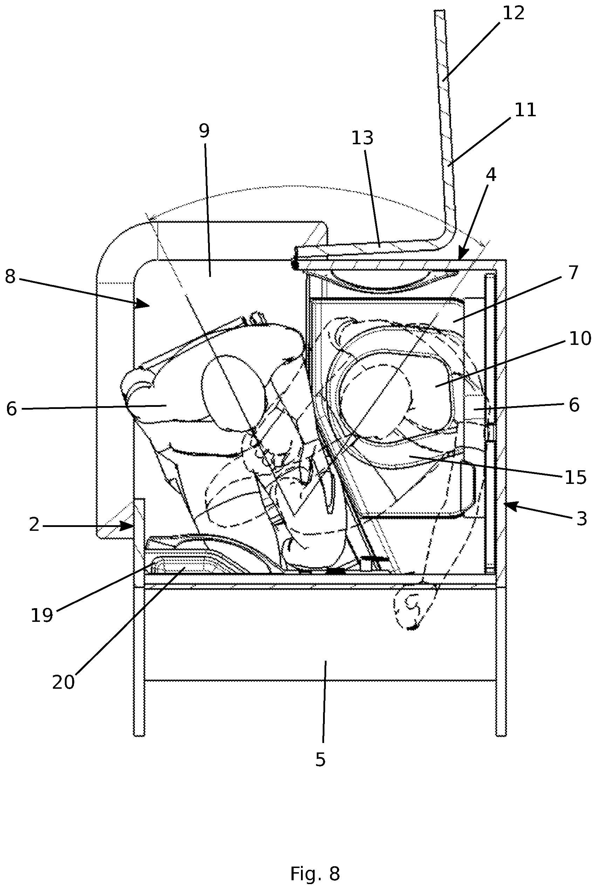

Die Toiletteneinheit 7 weist eine Abdeckung 21 auf, die in Fig. 2 im geschlossenen Zustand und in den restlichen Figuren im geöffneten Zustand gezeigt ist. Die Toiletteneinheit 7 weist auch mehrere Haltegriffe 22, 23, 24 auf. (Die Haltegriffe 22, 23, 24 sind in Fig. 2 nicht dargestellt.) Aus den Fig. 6 bis 8 ist ersichtlich, dass sich ein Rollstuhlfahrer 6 nur um einen geringen Drehwinkel drehen muss, um sich auf die Sitzfläche 18 zu setzen. Wie insbesondere in den Fig. 7 und 8 ersichtlich ist, muss die Person 6 nicht normal zur hinteren Längsseite 3 auf der Toiletteneinheit 7 sitzen, sondern kann bspw. einen Winkel von 20° mit der Normalen einschließen. In Fig. 8 ist die auf der Toiletteneinheit 7 sitzende Position der Person 6 gestrichelt eingezeichnet.

Es ist bspw. ein Kasten an der hinteren Schmalseite 5 vorgesehen. Da die hintere Schmalseite 5 gekrümmt ausgeführt ist, verdeckt ein Teil der hintere Schmalseite 5 in der Draufsicht der Fig. 3 bis 8 einen Teil der Inneneinrichtung der Bordtoilettenzelle 1. Die maximale Erstreckung der hinteren Schmalseite 5 nach hinten ist durch die hintere Linie ersichtlich.

## Patentansprüche

1. Bordtoilettenzelle (1), insbesondere Flugzeugbordtoilettenzelle, umfassend:
eine vordere Längsseite (2) und eine hintere Längsseite (3),
eine vordere Schmalseite (4) und eine hintere Schmalseite (5), die jeweils an ihrem einen Ende mit der vorderen Längsseite (2) und an ihrem anderen Ende mit der hinteren Längsseite (3) verbunden sind,
wobei die Längsseiten (2, 3) und die Schmalseiten (4, 5) einen Innenraum (8) der Bordtoilettenzelle (1) einschließen und die vordere und die hintere Längsseite (2, 3) jeweils breiter sind als die vordere und die hintere Schmalseite (4, 5),
eine Toiletteneinheit (7) mit einer Toilettenöffnung (10), und
eine L-förmige Tür (11) zum Zugang in die Bordtoilettenzelle (1), wobei die L-förmige Tür (11) einen Türschenkel (12) in der vorderen Längsseite (2) und einen Türschenkel (13) in der vorderen Schmalseite (4) aufweist,
**dadurch gekennzeichnet, dass**
die Toiletteneinheit (1) an die hintere Längsseite (3) angrenzend angeordnet ist und dass der Türschenkel (12) in der vorderen Längsseite (2) breiter als der Türschenkel (13) in der vorderen Schmalseite (4) ist.

2. Bordtoilettenzelle (1) nach Anspruch 1, **dadurch gekennzeichnet, dass** eine Toilettensitzachse (14) einen Winkel von weniger als 45°, bevorzugt weniger als 30°, mit einer Normalen der hinteren Längsseite (3) einschließt, wobei die Toilettensitzachse (14) bevorzugt im Wesentlichen parallel zur Normalen der hinteren Längsseite (3) verläuft.

3. Bordtoilettenzelle (1) nach einem der vorhergehenden Ansprüche, **dadurch gekennzeichnet, dass** der Angelpunkt (25) der Türe (11) an der vorderen Schmalseite (4) vorgesehen ist.

4. Bordtoilettenzelle (1) nach einem der vorhergehenden Ansprüche, **dadurch gekennzeichnet, dass** der Normalabstand der Toilettenöffnung (10) von der vorderen Längsseite (2) mehr als das 1,5-fache, bevorzugt mehr als das 2-fache, besonders bevorzugt mehr als das 3-fache, des Normalabstands des Mittelpunkts der Toilettenöffnung (10) von der hinteren Längsseite (3) beträgt.

5. Bordtoilettenzelle (1) nach einem der vorhergehenden Ansprüche, **dadurch gekennzeichnet, dass** der Normalabstand der Toilettenöffnung (10) von der vorderen Längsseite (2) mehr als 25%, bevorzugt mehr als 35%, besonders bevorzugt mehr als 45% der Breite der hinteren (5) und/oder der vorderen Schmalseite (4) beträgt.

6. Bordtoilettenzelle (1) nach einem der vorhergehenden Ansprüche, **dadurch gekennzeichnet, dass** der Normalabstand des Mittelpunkts der Toilettenöffnung (10) von der vorderen Schmalseite (4) mehr als 15%, bevorzugt mehr als 20%, besonders bevorzugt mehr als 30% der Breite der hinteren Längsseite (3) beträgt.

7. Bordtoilettenzelle (1) nach einem der vorhergehenden Ansprüche, **dadurch gekennzeichnet, dass** der Normalabstand des Mittelpunkts der Toilettenöffnung (10) von der hinteren Schmalseite (5) mehr als 25%, bevorzugt mehr als 35%, besonders bevorzugt mehr als 45% der Breite der hinteren Längsseite (3) beträgt.

8. Bordtoilettenzelle (1) nach einem der vorhergehenden Ansprüche, **dadurch gekennzeichnet, dass** die Toiletteneinheit (10) eine Sitzfläche (18) umfasst, in der die Toilettenöffnung (10) vorgesehen ist, wobei ein Schrägabschnitt (17) einer der vorderen Längsseite (2) zugewandten horizontal verlaufenden Kante (16) der Sitzfläche (18) einen Winkel zwischen 1° und 60°, bevorzugt zwischen 5° und 45°, mit der hinteren Längsseite (3) einschließt.

9. Bordtoilettenzelle (1) nach Anspruch 8, **dadurch gekennzeichnet, dass** der Schrägabschnitt (17) der Kante (16) auf einer Geraden liegt, die den auf der vorderen Schmalseite (4) liegenden Türschenkel (13), bevorzugt jene Hälfte des Türschenkels (13), der näher an der hinteren Längsseite (3) liegt, schneidet.

10. Bordtoilettenzelle (1) nach einem der Ansprüche 8 oder 9, **dadurch gekennzeichnet, dass** ein der vorderen Schmalseite (4) zugewandter Ansatzpunkt (26) des Schrägabschnitts (17) der Kante (16) an der Sitzfläche (18) einen Normalabstand von der vorderen Schmalseite (4) aufweist, der geringer ist als die Längserstreckung des Türschenkels (12) an der vorderen Längsseite (2).

11. Bordtoilettenzelle (1) nach einem der vorhergehenden Ansprüche, **gekennzeichnet durch** eine Waschbeckeneinheit (19) mit einem Waschbecken (20), wobei die Waschbeckeneinheit (19) angrenzend an die hintere Schmalseite (5) angeordnet ist.

12. Bordtoilettenzelle (1) nach Anspruch 11, **dadurch gekennzeichnet, dass** das Waschbecken (20) benachbart der vorderen Längsseite (2) angeordnet ist.

13. Bordtoilettenzelle (1) nach einem der Ansprüche 11 oder 12, **dadurch gekennzeichnet, dass** die Toilettenöffnung (10) in einer horizontalen Entfernung von weniger als 1,5 m, bevorzugt weniger als 1 m, besonders bevorzugt weniger als 80 cm, von dem Waschbecken (20) angeordnet ist.

14. Bordtoilettenzelle (1) nach einem der Ansprüche 11 bis 13, **dadurch gekennzeichnet, dass** der Normalabstand des Waschbeckens (20) von der hinteren Längsseite (3) mehr als 50%, bevorzugt mehr als 65%, der Länge der hinteren Schmalseite (5) beträgt.

15. Flugzeug, **gekennzeichnet durch** eine Bordtoilettenzelle (1) nach einem der vorhergehenden Ansprüche, wobei vorzugsweise die Bordtoilettenzelle (1) derart angeordnet ist, dass ein an die vordere Schmalseite (4) anschließender Gang zu einem Sitzbereich für Passagiere führt.

## Claims

1. An on-board toilet cubicle (1), in particular an aircraft on-board toilet cubicle, comprising:
a front long side (2) and a rear long side (3),
a front short side (4) and a rear short side (5), which are each connected at one end to the front long side (2) and at the other end to the rear long side (3),
the long sides (2, 3) and the short sides (4, 5) enclosing an interior (8) of the on-board toilet cubicle (1) and the front and the rear long side (2, 3) each being wider than the front and the rear short side (4, 5),
a toilet unit (7) having a toilet opening (10),
and
an L-shaped door (11) for accessing the on-board toilet cubicle (1), the L-shaped door (11) having a door leg (12) in the front long side (2) and a door leg (13) in the front short side (4),
**characterised in that**
the toilet unit (1) is arranged adjacent to the rear long side (3) and **in that** the door leg (12) in the front long side (2) is wider than the door leg (13) in the front short side (4).

2. The on-board toilet cubicle (1) according to claim 1, **characterised in that** a toilet seat axis (14) includes an angle of less than 45°, preferably less than 30°, with a normal of the rear long side (3), the toilet seat axis (14) preferably extending substantially parallel to the normal of the rear long side (3).

3. The on-board toilet cubicle (1) according to either of the preceding claims, **characterised in that** the hinge point (25) of the door (11) is provided on the front short side (4).

4. The on-board toilet cubicle (1) according to any of the preceding claims, **characterised in that** the perpendicular distance of the toilet opening (10) from the front long side (2) is more than 1.5 times, preferably more than 2 times, particularly preferably more than 3 times, the perpendicular distance of the centre point of the toilet opening (10) from the rear long side (3).

5. The on-board toilet cubicle (1) according to any of the preceding claims, **characterised in that** the perpendicular distance of the toilet opening (10) from the front long side (2) is more than 25%, preferably more than 35%, particularly preferably more than 45%, of the width of the rear short side (5) and/or the front short side (4).

6. The on-board toilet cubicle (1) according to any of the preceding claims, **characterised in that** the perpendicular distance of the centre point of the toilet opening (10) from the front short side (4) is more than 15%, preferably more than 20%, particularly preferably more than 30%, of the width of the rear long side (3).

7. The on-board toilet cubicle (1) according to any of the preceding claims, **characterised in that** the perpendicular distance of the centre point of the toilet opening (10) from the rear short side (5) is more than 25%, preferably more than 35%, particularly preferably more than 45%, of the width of the rear long side (3).

8. The on-board toilet cubicle (1) according to any of the preceding claims, **characterised in that** the toilet unit (10) comprises a seat surface (18) in which the toilet opening (10) is provided, an oblique portion (17) of a horizontally extending edge (16) of the seat surface (18), which portion faces the front long side (2), including an angle of between 1° and 60°, preferably between 5° and 45°, with the rear long side (3).

9. The on-board toilet cubicle (1) according to claim 8, **characterised in that** the oblique portion (17) of the edge (16) lies on a straight line which intersects the door leg (13) on the front short side (4), preferably the half of the door leg (13) that is closer to the rear long side (3).

10. The on-board toilet cubicle (1) according to either claim 8 or claim 9, **characterised in that** a starting point (26), facing the front short side (4), of the inclined portion (17) of the edge (16) on the seat surface (18) has a perpendicular distance from the front short side (4) that is smaller than the longitudinal extent of the door leg (12) on the front long side (2).

11. The on-board toilet cubicle (1) according to any of the preceding claims, **characterised by** a washbasin unit (19) comprising a washbasin (20), the washbasin unit (19) being arranged adjacent to the rear short side (5).

12. The on-board toilet cubicle (1) according to claim 11, **characterised in that** the washbasin (20) is arranged adjacent to the front long side (2).

13. An on-board toilet cubicle (1) according to either claim 11 or claim 12, **characterised in that** the toilet opening (10) is arranged at a horizontal distance of less than 1.5 m, preferably less than 1 m, particularly preferably less than 80 cm, from the washbasin (20).

14. The on-board toilet cubicle (1) according to any of claims 11 to 13, **characterised in that** the perpendicular distance of the washbasin (20) from the rear long side (3) is more than 50%, preferably more than 65%, of the length of the rear short side (5).

15. An aircraft, **characterised by** an on-board toilet cubicle (1) according to any of the preceding claims, wherein preferably the on-board toilet cubicle (1) is arranged such that a corridor adjoining the front short side (4) leads to a seating area for passengers.

## Revendications

1. Cabine de toilettes à bord (1), en particulier cabine de toilettes à bord d'un avion, comprenant :
un côté long avant (2) et un côté long arrière (3),
un côté étroit avant (4) et un côté étroit arrière (5), qui sont respectivement reliés au niveau de leur une extrémité avec le côté long avant (2) et au niveau de leur autre extrémité avec le côté long arrière (3),
dans laquelle les côtés longs (2, 3) et les côtés étroits (4, 5) enserrent un espace intérieur (8) de la cabine de toilettes à bord (1) et le côté long avant et le côté long arrière (2, 3) sont respectivement plus larges que le côté étroit avant et le côté étroit arrière (4, 5),
une unité de toilettes (7) avec une ouverture de toilettes (10), et
une porte en forme de L (11) pour l'accès à la cabine de toilettes à bord (1), dans laquelle la porte en forme de L (11) présente un battant de porte (12) dans le côté long avant (2) et un battant de porte (13) dans le côté étroit avant (4),
**caractérisé en ce que**
l'unité de toilettes (1) est agencée de façon limitrophe au côté long arrière (3) et **en ce que** le battant de porte (12) dans le côté long avant (2) est plus large que le battant de porte (13) dans le côté étroit avant (4).

2. Cabine de toilettes à bord (1) selon la revendication 1, **caractérisée en ce qu'**un axe de siège de toilettes (14) forme un angle de moins de 45°, de préférence de moins de 30°, avec une normale du côté long arrière (3), dans laquelle l'axe de siège de toilettes (14) se déroule de préférence essentiellement parallèlement à la normale du côté long arrière (3).

3. Cabine de toilettes à bord (1) selon l'une des revendications précédentes, **caractérisée en ce que** le point pivot (25) des portes (11) est prévu sur le côté étroit avant (4).

4. Cabine de toilettes à bord (1) selon l'une des revendications précédentes, **caractérisée en ce que** la distance normale de l'ouverture de toilettes (10) depuis le côté long avant (2) s'élève à plus de 1,5 fois, de préférence plus de 2 fois, particulièrement de préférence plus de 3 fois la distance normale du point central de l'ouverture de toilettes (10) depuis le côté long arrière (3).

5. Cabine de toilettes à bord (1) selon l'une des revendications précédentes, **caractérisée en ce que** la distance normale de l'ouverture de toilettes (10) depuis le côté long avant (2) s'élève à plus de 25 %, de préférence plus de 35 %, particulièrement de préférence plus de 45 % de la largeur du côté étroit arrière (5) et/ou du côté étroit avant (4).

6. Cabine de toilettes à bord (1) selon l'une des revendications précédentes, **caractérisée en ce que** la distance normale du point central de l'ouverture de toilettes (10) depuis le côté étroit avant (4) s'élève à plus de 15 %, de préférence plus de 20 %, particulièrement de préférence plus de 30 % de la largeur du côté long arrière (3).

7. Cabine de toilettes à bord (1) selon l'une des revendications précédentes, **caractérisée en ce que** la distance normale du point central de l'ouverture de toilettes (10) depuis le côté étroit arrière (5) s'élève à plus de 25 %, de préférence plus de 35 %, particulièrement de préférence plus de 45 % de la largeur du côté long arrière (3).

8. Cabine de toilettes à bord (1) selon l'une des revendications précédentes, **caractérisée en ce que** l'unité de toilettes (10) comprend une surface de siège (18) dans laquelle est prévue l'ouverture de toilettes (10), dans laquelle une section oblique (17) d'un bord (16), de la surface de siège (18), se déroulant horizontalement et tourné vers le côté long avant (2), forme un angle entre 1° et 60°, de préférence entre 5° et 45°, avec le côté long arrière (3).

9. Cabine de toilettes à bord (1) selon la revendication 8, **caractérisée en ce que** la section oblique (17) du bord (16) se situe sur une droite qui coupe le battant de porte (13) se situant sur le côté étroit avant (4), de préférence la moitié du battant de porte (13) qui se situe plus près du côté long arrière (3).

10. Cabine de toilettes à bord (1) selon l'une des revendications 8 ou 9, **caractérisée en ce qu'**un point de départ (26), tourné vers le côté étroit avant (4), de la section oblique (17) du bord (16) présente au niveau de la surface de siège (18) une distance normale depuis le côté étroit avant (4) qui est plus petite que l'extension longitudinale du battant de porte (12) sur le côté long avant (2).

11. Cabine de toilettes à bord (1) selon l'une des revendications précédentes, **caractérisée par** une unité de lavabo (19) avec un lavabo (20), dans laquelle l'unité de lavabo (19) est agencée de façon limitrophe au côté étroit arrière (5).

12. Cabine de toilettes à bord (1) selon la revendication 11, **caractérisée en ce que** le lavabo (20) est agencé de façon à avoisiner le côté long avant (2).

13. Cabine de toilettes à bord (1) selon l'une des revendications 11 ou 12, **caractérisée en ce que** l'ouverture de toilettes (10) est agencée à une distance horizontale de moins de 1,5 m, de préférence de moins de 1 m, particulièrement de préférence de moins de 80 cm, du lavabo (20).

14. Cabine de toilettes à bord (1) selon l'une des revendications 11 à 13, **caractérisée en ce que** la distance normale du lavabo (20) depuis le côté long arrière (3) s'élève à plus de 50 %, de préférence plus de 65 %, de la longueur du côté étroit arrière (5).

15. Avion, **caractérisé par** une cabine de toilettes à bord (1) selon l'une des revendications précédentes, dans lequel de préférence la cabine de toilettes à bord (1) est agencée de sorte qu'un couloir raccordant au côté étroit avant (4) mène vers une zone de sièges pour passagers.
